# EUROPEAN PATENT APPLICATION

(11) **EP 2 418 687 A1**
(43) Date of publication of application: **15.02.2012**
(21) Application number: 10172607.3
(22) Date of filing: 12.08.2010
(51) Int. Cl.: H01L 31/042

(54) **Photovoltaic panel comprising an inverter**

(71) Applicant: Alvisi, Matteo, 37047 San Bonifacio (VR) (IT); Alvisi, Cesare, 37047 San Bonifacio (VR) (IT)
(72) Inventor: Alvisi, Matteo, 37047 San Bonifacio (VR) (IT); Alvisi, Cesare, 37047 San Bonifacio (VR) (IT)
(74) Representative: Modiano, Micaela Nadia

(57) **Abstract**

A photovoltaic panel (1) comprising a respective inverter (2) adapted to convert and stabilize the electrical generation of the photovoltaic panel (1) from direct current (DC) to alternating current (AC).

## Description

The present invention relates to a photovoltaic panel.

Today, greater attention to environmental issues has caused a development in the research and use of so-called "renewable energy sources", such as for example photovoltaic power.

Small photovoltaic systems (i.e., systems capable of meeting the requirements of domestic users), as well as large ones, which are located for example at uncultivated land, are constituted typically by a plurality of photovoltaic panels which are connected, by means of appropriately sized connecting cables, to a DC-AC inverter in order to convert the direct current (DC) generated by the photovoltaic panels into alternating current (AC).

Downstream of the DC-AC inverter there are generally devices for the management of the alternating current (AC), which is raised to the voltage for use (220 V - 400 V) in order to allow its correct distribution both toward the public grid, in case of transfer, and to the domestic user devices of the owner of the system.

In the photovoltaic systems currently installed, as well as in small "domestic" ones, the inverter (which is a single unit and is connected to all the photovoltaic panels) has often considerable dimensions, space occupations and costs.

The constructive solution described above, despite being currently widely used, is not free from drawbacks.

First of all, it is necessary to oversize the inverter (and the corresponding accessories) to allow any subsequent increase in the installed power (i.e., in the installed photovoltaic panels).

Moreover, in currently known systems there is the need to manage some segments of lines (from the photovoltaic panels to the inverter) through which direct current (DC) flows and other segments (located downstream of the inverter) through which alternating current (AC) flows.

This causes the need to employ specialized workers for the installation and maintenance of the system (with a corresponding increase in costs) and to have higher electrical leakages.

The aim of the present invention is to solve the problems and obviate the drawbacks described above, by providing a photovoltaic panel that is considerably more practical and economically more advantageous to use.

Within this aim, an object of the invention is to provide a photovoltaic panel that can be installed simply and reliably even by a non-expert.

This aim and this and other objects that will become better apparent hereinafter are achieved by a photovoltaic panel according to what is provided in claim 1 given hereafter.

Further characteristics and advantages of the invention will become better apparent from the detailed description that follows of some preferred but not exclusive embodiments of a photovoltaic panel according to the invention, illustrated by way of non-limiting example in the accompanying drawings, wherein:
Figure 1 is a schematic view of a system that uses a plurality of photovoltaic panels according to the invention;
Figure 2 is an enlarged-scale view of a photovoltaic panel;
Figure 3 is a constructive variation in which the inverter is arranged between the photovoltaic panel and the main electrical line.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, a photovoltaic panel, generally designated by the reference numeral 1, is associated with a respective inverter 2 and is adapted to convert and stabilize electrical generation from direct current (DC) to alternating current (AC).

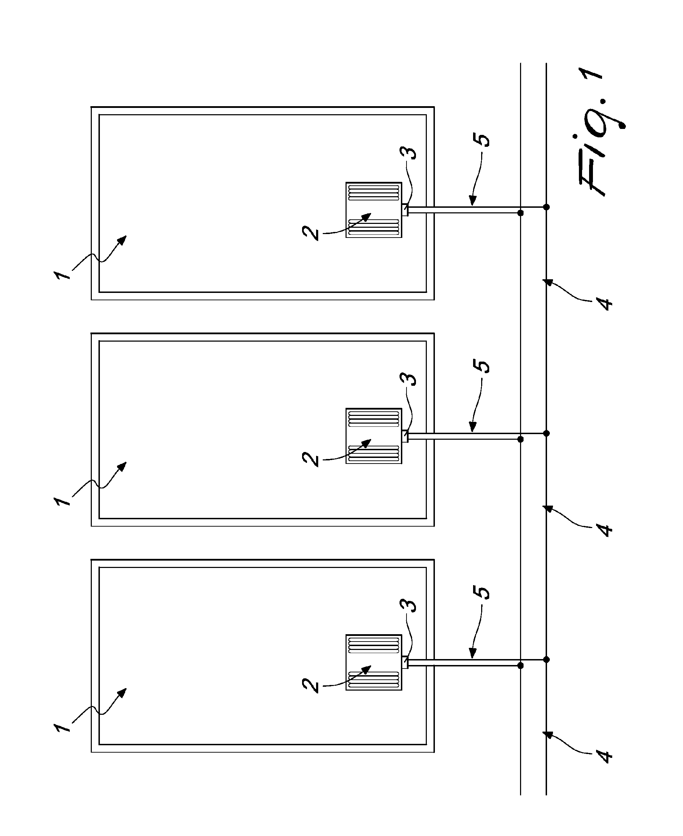

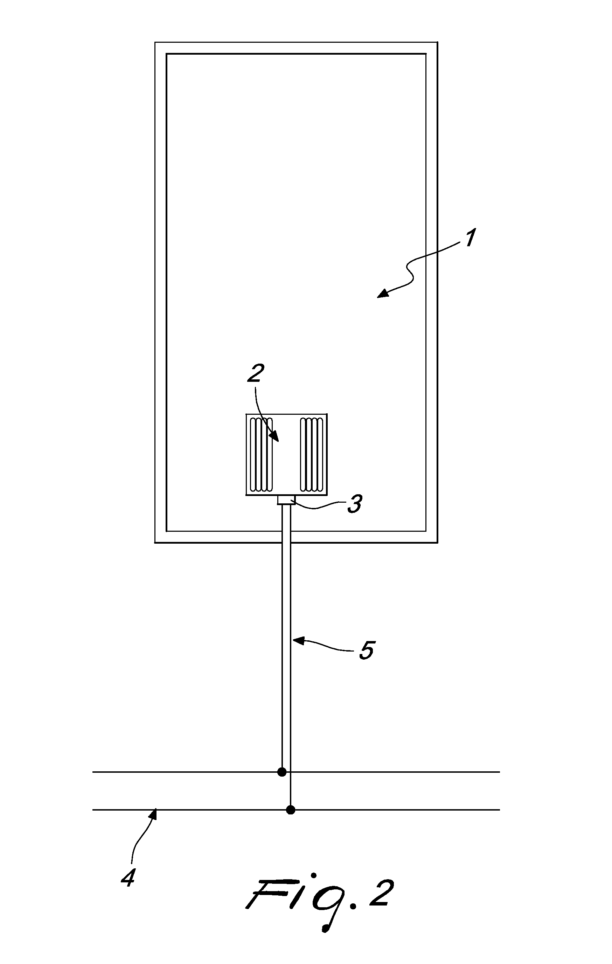

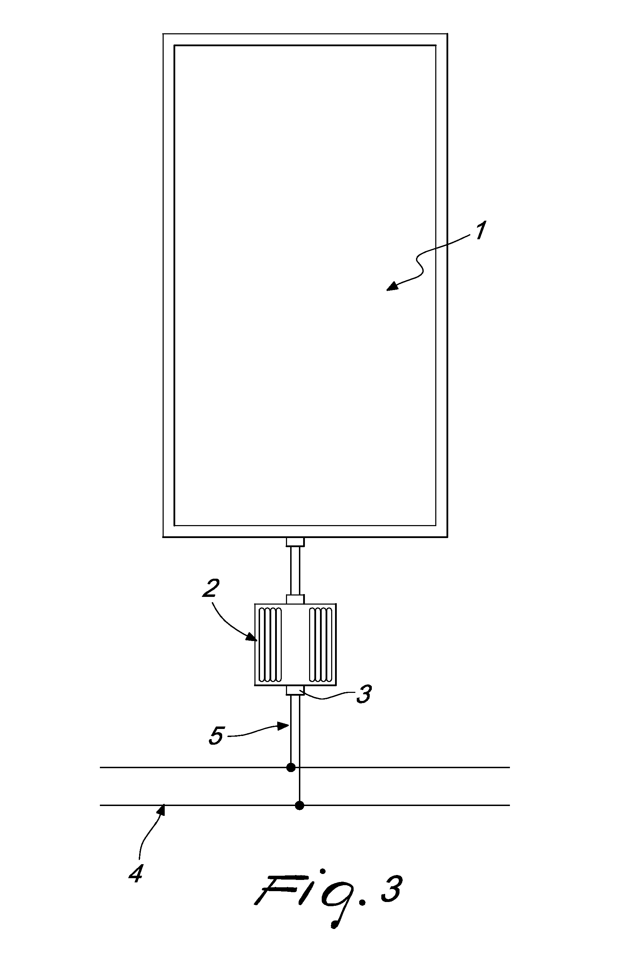

Conveniently, the inverter 2 is integrated with each photovoltaic panel 1 (as shown in Figures 1 and 2); however, nothing forbids to propose inverters 2 that can be associated (externally) with a respective photovoltaic panel 1, as shown schematically in Figure 3.

It is evident that a system constituted by one or more photovoltaic panels 1 according to the invention allows to simplify the system for the transfer and management of the electric power generated by the individual photovoltaic panel 1, allowing to distribute, already from the output of each photovoltaic panel 1, alternating current (AC) instead of direct current (DC), which can be raised to the desired value (115 V, 230 V, 400 V) according to requirements.

According to a preferred embodiment, each photovoltaic panel 1 is associated with a respective electrical connection terminal 3 or wire-wrap wiring, which can be connected to a main electrical line 4 capable of bearing the set maximum and short-circuit electrical load, which increases as a function of the power and is sized by also taking into account subsequent expansions of the system.

In greater detail, the inverter 2 can be constituted by a sinusoidal inverter and specifically by an inverter with a pure sinusoidal waveform, without harmonics, and with an adapted noise filter and powerline data transmission for synchronization to the frequency of for example 50 Hz among the various photovoltaic panels 1 and remote control.

Merely by way of example, if one wishes to provide a system with 1 kW of power at 220 V, five photovoltaic panels 1, for example, are installed with a power of 200 W each, arranged in a battery and respectively connected by means of connecting cables 5 and by means of adapted wiring to the main electrical line 4.

Alternating current (AC) flows through the connecting cables 5 and is thus fed to the main electrical line, which can have, for example, a cross-section of 2.5 mm² so as to allow the connection of additional photovoltaic panels 1 without requiring the provision of any centralized inverter, allowing accordingly an extremely simple installation of the system.

As already explained, at a later time the system can be further expanded by adding other photovoltaic panels 1 to increase the available power.

The use of small inverters 2 (typically 7-8 amperes of utilization for each individual photovoltaic panel 1) associated or advantageously integrated with the photovoltaic panel 1 has, moreover, a very convenient cost, so as to reduce the overall cost of the system.

Moreover, small inverters 2 do not require large heat sinks and do not require particular protections.

Further, it has been observed that the inverters 2 associated with each photovoltaic panel 1 have much smaller and more controllable radio noise of the harmonics.

Specifically, the inverter 2 can be provided with adjustment means designed to make it adaptable to preset power and/or voltage and/or frequency values as a function of the type of photovoltaic panel 1 for which it is intended and/or the characteristics of the main electrical line 4.

The system for the transfer and management of the electric power generated by the individual photovoltaic panel 1 is thus easy to provide, without the need to use the grid forced by the provision of strings and field switchboards, simultaneously reducing the cross-section of the connecting cables 5 (which require significantly larger cross-sections for the transfer of direct current) and of the switches, disconnectors and the various cutoffs, which are enlarged when it is necessary to manage direct current (DC).

Conveniently, the energy transfer and management system according to the invention can be provided, if provisions are made for the sale of part of the generated electric power, with a device for centralizing the service switches, with meters for reading the generated current and with a safety device, which are interfaced with the public grid.

Advantageously, a plurality of photovoltaic panels 1 according to the invention can be used to provide a so-called "stand-alone system", with all the advantages cited above: in this case, however, it will be necessary to arrange, directly upstream of the charging assembly and of the electrical batteries, a transformer and rectifier device to be able to feed direct current and voltage into the electrical batteries.

In practice, the system for the transfer and management of electric power according to the invention is constituted by one or more photovoltaic panels 1, each of which is associated with a respective inverter 2, so that it is necessary to manage, in output from each photovoltaic panel 1, only alternating current (AC).

Specifically, the photovoltaic panels 1 with alternating-current output are mutually synchronized at a frequency of 50 Hz and with a precise sinusoidal form and with a power equal to the surface of the panels that is exposed to light.

The inverters 2 might further communicate with each other by way of mutual communication means, for example by means of powerline carrier waves, so as to be able to manage the alignment and communicate with a central PC in order to transfer data and analyses.

The operation of a photovoltaic panel 1 according to the invention and of a system provided thereby is evident from what has been described above.

In practice it has been found that the invention has countless advantages.

In particular, it has been observed experimentally that thanks to the higher production sensitivity of the individual photovoltaic panel 1, in days with limited sunlight or days with cloudy periods, the overall performance of the system is more manageable, since it follows in a linear manner the intensity of solar radiation (kW/m²) for an extremely wide range, lowering the threshold of interruption of electric power delivery due to lack of sunlight, since the inverter 2 (which is small) is provided with an electrical stabilizer in input and in output.

Moreover, the mismatch effect is extremely attenuated, because each photovoltaic panel 1 is a generator and converter, in alternating current, of the generated electric current.

The compactness and the reduction of the inverter 2 to a few amperes allows to provide a system that is extremely economical and reliable, despite maintaining high-level characteristics. Moreover, even if a photovoltaic panel 1 does not operate correctly, the incidence on the final performance would "disturb" only and individually the malfunctioning power unit and not, as in systems with a centralized inverter, one or more strings with an evident reduction in the overall performance of the system.

In practice, the dimensions may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A photovoltaic panel (1), **characterized in that** it comprises a respective inverter (2), which is adapted to convert and stabilize the electrical generation of said photovoltaic panel (1) from direct current (DC) to alternating current (AC).

2. The photovoltaic panel (1) according to claim 1, **characterized in that** said inverter (2) is integrated with the respective photovoltaic panel (1).

3. The photovoltaic panel (1) according to one or more of the preceding claims, **characterized in that** it comprises a respective terminal for electrical connection (3), which is connected to said inverter (2) and can be connected to a main electrical line (4).

4. The photovoltaic panel (1) according to one or more of the preceding claims, **characterized in that** said inverter (2) comprises an inverter with pure sinusoidal waveform, without harmonics, and with an adapted noise filter and powerline data transmission, adapted to synchronize to the preset frequency the photovoltaic panels (1) connected to said main electrical line (4).

5. A system for transferring and managing electric power from at least one photovoltaic panel (1) according to one or more of the preceding claims, **characterized in that** it comprises a plurality of photovoltaic panels (1) associated with a respective inverter (2), which is adapted to convert and stabilize the electrical generation of the respective photovoltaic panel (1) from direct current (DC) to alternating current (AC).

6. The system for transferring and managing electric power from at least one photovoltaic panel (1) according to claim 5, **characterized in that** said photovoltaic panels (1) with an alternating-current output are mutually synchronized at a frequency of 50 Hz and with a precise sinusoidal form.

7. The system for transferring and managing electric power from at least one photovoltaic panel (1) according to one or more of claims 5 and 6, **characterized in that** said inverters (2) are provided with means for mutual communication in order to communicate with each other, by means of powerline carrier waves, so as to manage mutual alignment and communicate with a central PC to transfer data and analyses.

8. The inverter (2) according to one or more of the preceding claims, **characterized in that** it is associated or integrated with a respective photovoltaic panel (1).

9. The inverter (2) according to claim 8, **characterized in that** it comprises adjustment means designed to make it adaptable to preset power and/or voltage and/or frequency values.
